# EUROPÄISCHE PATENTSCHRIFT

(11) **EP 3 633 470 B1**
(45) Veröffentlichungstag und Bekanntmachung des Hinweises auf die Patenterteilung: **14.06.2023**
(21) Anmeldenummer: 19211490.8
(22) Anmeldetag: 16.01.2014
(51) Int. Cl.: H04W 4/80, G05B 19/042

(54) **STEUERVORRICHTUNG, KOMPONENTEN UND MOBILE SERVICEVORRICHTUNG FÜR EINE HVAC-ANLAGE**
CONTROL APPARATUS, COMPONENTS AND MOBILE SERVICE APPARATUS FOR AN HVAC SYSTEM
DISPOSITIF DE COMMANDE, COMPOSANTS ET DISPOSITIF DE SERVICE MOBILE POUR INSTALLATION CVC

(30) Priorität: 28.02.2013 CH 5232013
(43) Veröffentlichungstag der Anmeldung: 08.04.2020
(62) Teilanmeldung aus: 14700555.7
(73) Patentinhaber: Belimo Holding AG, 8340 Hinwil (CH)
(72) Erfinder: SCHMIDLIN, Peter, 8340 Hinwil (CH); GROGG, Silvio, 8620 Wetzikon (CH)
(74) Vertreter: Rentsch Partner AG

(56) Entgegenhaltungen:
- EP-A1- 1 736 843
- WO-A1-01/67005
- WO-A1-2006/056532
- US-A- 5 844 888
- US-A1- 2006 200 256
- US-A1- 2010 097 238

## Beschreibung

### TECHNISCHES GEBIET

Die Erfindung bezieht sich auf eine Steuervorrichtung für eine HVAC-Anlage, auf eine mobile Servicevorrichtung für die Konfiguration einer HVAC-Anlage, und auf ein Verfahren zur Konfiguration einer HVAC-Anlage.

### STAND DER TECHNIK

HVAC-Anlagen (HVAC: Heating, Ventilation and Air Conditioning) umfassen mehrere verteilt in Zweigen oder Strängen angeordnete Verbraucher, welche mit einem flüssigen oder gasförmigen Fluid versorgt werden. Um eine gewünschte Verteilung des Fluids an die Verbraucher zu erhalten, sind Ausgleichs- oder Regel- und Abgleichorgane vorgesehen, beispielsweise einstellbare Stellglieder, insbesondere Ventile, wobei der Durchfluss durch betreffende Verbraucher durch unterschiedliche Öffnungsgrade respektive Ventilstellungen eingestellt wird. Die Installation von HVAC-Anlagen erfordert neben der Anordnung der Verbraucher mit den dazugehörenden Leitungen, Halterungen, etc. ebenso die bedarfsgerechte Installation der Ausgleichs- oder Regel- und Abgleichorgane, welche an unterschiedlichen Standorten individuelle Erfordernisse erfüllen müssen. Je nach Anforderungen muss beispielsweise ein Regel- und Abgleichorgan für eine Zentrale ganz andere Parameter aufweisen als ein Regel- und Abgleichorgan für ein Grossraumbüro. In weiteren HVAC-Anwendungen werden mehrere als Slaves konfigurierte Regel- und Abgleichorgane einem als Master konfigurierten Regel- und Abgleichorgan zugeordnet.

Auch in solchen Konfigurationen müssen die Regel- und Abgleichorgane individuelle Parametereinstellungen aufweisen und zudem muss eine korrekte Zuordnung der Slaves zum Master sichergestellt sein.

Bestimmte individuelle Parameter von Regel- und Abgleichorganen einer HVAC-Anlage müssen jeweils direkt bei der Installation des Regel- und Abgleichorgans vorgenommen werden. So werden heutzutage individuelle Parameter der Regel- und Abgleichorgane beispielsweise durch die Verdrehung einer Potentiometerposition mit einem Schraubenzieher oder durch Anschliessen und Bedienen eines Service-Tools via eine Servicebuchse eingestellt.

Die US 7,898,147 zeigt einen elektronisch konfigurierbaren Stellantrieb. Der Stellantrieb umfasst einen elektrisch steuerbaren mechanischen Wandler, eine drahtlose Schnittstelle für den Empfang von Daten die den Betrieb des Stellantriebs und mindestens eines davon externen Geräts betreffen, ein Einstelldatenmodul für die Speicherung der Daten, eine drahtgebundene Schnittstelle zur Verwaltung externer Geräte aufgrund der Daten und eine Steuermodul zur Steuerung des mechanischen Wandlers entsprechend der Daten. Die drahtlose Schnittstelle ist für die Übertragung von funkbasierten, optischen oder akustischen Signalen eingerichtet, beispielsweise gemäss einem Standard wie Bluetooth, IrDA, IEEE 802.11 (WLAN), HomeRF, etc oder gemäss einer Mobilfunktechnik. Daten können auf einem tragbaren Computer, einem PDS (Personal Digital Assistant) oder einem Mobiltelefon erstellt und über die drahtlose Schnittstelle an den Stellantrieb übertragen werden.

Die US 6,667,690 zeigt das Konfigurieren eines Kommunikationsnetzwerks einer HVAC-Anlage, insbesondere das Identifizieren eines HVAC-Geräts einer HVAC-Anlage und das Zuordnen einer Netzwerkadresse. Die HVAC-Geräte weisen je einen RFID-Transponder auf, deren Identifikation auf ein tragbares Gerät eines Technikers übertragen wird, falls dieses in die Übertragungsreichweite des RFID-Transponders gebracht wird. Aufgrund eines Raumplans selektiert der Techniker auf dem tragbaren Gerät den Ort des HVAC-Geräts, worauf durch das tragbare Gerät eine Netzwerkadresse für diesen Ort bestimmt wird, beispielsweise aufgrund einer Datenbank. Die Identifikation des RFID-Transponders und die Netzwerkadresse werden vorzugsweise über eine Infrarotschnittstelle auf ein Kommunikationsgerät übertragen.

Die US 2010/097238 befasst sich mit der Konfiguration eines Gebäudeautomationssystems umfassend Garagentüren, Rollladen, etc. Jeder Antrieb ist identifiziert durch einen in einem Speicher abgespeicherten Identifikator, der auf einem am Antrieb angebrachten sichtbaren Label dupliziert ist. Ebenso hat ein zu paarender Transmitter ein Label, auf welchem ein Identifikator dupliziert ist. Ein Konfigurationsgerät erfasst einen Identifikator von einem Label eines Antriebs und von einem Label eines Transmitters. Das Konfigurationsgerät übermittelt den Identifikator des Senders an den Antrieb, um eine Paarung aufzulösen oder zu erstellen.

### DARSTELLUNG DER ERFINDUNG

Es ist eine Aufgabe der vorliegenden Erfindung einen Antrieb für eine HVAC-Anlage vorzuschlagen, welche zumindest gewisse Nachteil des Standes der Technik vermeiden oder reduzieren. Es ist insbesondere eine Aufgabe der vorliegenden Erfindung einen Antrieb für eine HVAC-Anlage vorzuschlagen, welche es ermöglichen, die Konfiguration der HVAC-Anlage vor dem Einschalten der Stromversorgung der HVAC-Anlage durchzuführen.

Gemäss der vorliegenden Erfindung werden diese Ziele durch die Elemente der unabhängigen Ansprüche erreicht. Weitere vorteilhafte Ausführungsformen gehen ausserdem aus den abhängigen Ansprüchen und der Beschreibung hervor.

Eine Steuervorrichtung für eine HVAC-Anlage, welche Steuervorrichtung ein Kommunikationsmodul aufweist für die Kommunikation mit einer oder mehreren Komponenten der HVAC-Anlage, umfasst: einen passiven NFC-Transponder, der eingerichtet ist, vor dem Einschalten einer Stromversorgung der Steuervorrichtung von einer mobilen Servicevorrichtung je einen eindeutigen Identifikator der einen oder mehreren Komponenten zu empfangen und abzuspeichern, und ein Steuermodul, das eingerichtet ist, nach dem Einschalten einer Stromversorgung der Steuervorrichtung auf abgespeicherte Identifikatoren zuzugreifen und über das Kommunikationsmodul Steuersignale an durch die Identifikatoren bestimmten Komponenten zu übermitteln. Die Konfiguration der Antriebe und Steuervorrichtung einer HVAC-Anlage kann zu einem Zeitpunkt erfolgen, bei welchem die betreffenden Geräte noch nicht an eine Stromversorgung angeschlossen sind. Damit kann insbesondere vermieden werden, dass diese Geräte während der Installation einer HVAC-Anlage mehrfach durch Sanitärtechniker aufgesucht werden müssen und dass Elektriker, die sich mit der Konfiguration von HVAC-Anlagen nicht auskennen, sich auf die elektrische Verdrahtung zum Anschliessen der HVAC-Anlage an ihre Stromversorgung konzentrieren können, ohne Kenntnisse der Anordnung, Verbindung und Konfiguration von Komponenten der HVAC-Anlage haben zu müssen. Der NFC-Transponder ist beispielsweise in oder an einem Gehäuse der Steuervorrichtung angebracht. In einer Variante ist der NFC-Transponder abgesetzt vom Gehäuse der Steuervorrichtung angebracht und über ein Kabel mit der Steuervorrichtung verbunden.

Es ist wichtig festzuhalten, dass sich der Begriff "Konfiguration" auf das Konfigurieren von Antrieben und Steuervorrichtungen der HVAC-Anlage vor dem Einschalten einer Stromversorgung bezieht. Dagegen bezieht sich der Begriff "Kommunikation" auf die Übermittlung von Steuersignalen etc. zwischen den Steuervorrichtungen und den Antrieben der HVAC-Anlage nachdem eine Stromversorgung eingeschaltet ist.

In einer Ausführungsform der Steuervorrichtung sind der passive NFC-Transponder respektive das Steuermodul eingerichtet, Identifikatoren zu empfangen und abzuspeichern respektive Steuersignale zu übermitteln, welche eine Sensorvorrichtung der HVAC-Anlage, einen Antrieb der HVAC-Anlage, eine Regelvorrichtung der HVAC-Anlage, ein Raumbediengerät der HVAC-Anlage, ein Gateway für die Kommunikation zwischen verschiedenen Kommunikationsnetzen der HVAC-Anlage, einen Aktor der HVAC-Anlage und/oder eine Schnittstellenvorrichtung für Eingangs- und Ausgangssignale der HVAC-Anlage betreffen. Eine Regelvorrichtung der HVAC-Anlage ist beispielsweise eingerichtet, aufgrund irgendeines Eingangssignals für irgendeine eine Komponente der HVAC-Anlage ein Steuersignal zu bestimmen. Ein Gateway für die Kommunikation zwischen verschiedenen Kommunikationsnetzen der HVAC-Anlage ist beispielsweise eingerichtet, die Kommunikation zwischen unterschiedlichen Protokollen zu ermöglichen. Ein Aktor der HVAC-Anlage umfasst beispielsweise ein Gebläse, ein Kühlaggregat, ein Heizaggregat, etc. Eine Schnittstellenvorrichtung für Eingangs- und Ausgangssignale der HVAC-Anlage ist beispielsweise eingerichtet, Betriebswerte der HVAC-Anlage zu erfassen, zu protokollieren, etc.

In einer Ausführungsform der Steuervorrichtung ist das Steuermodul eingerichtet, nach dem Einschalten einer Stromversorgung der Steuervorrichtung Steuersignale an durch die Identifikatoren bestimmte Komponenten zu übermitteln, mit welchen abgefragt wird, ob die betreffende Komponente verfügbar ist. Dadurch wird ermöglicht, automatisch zu überprüfen, ob die Komponenten korrekt installiert sind.

In einer Ausführungsform der Steuervorrichtung ist der passive NFC-Transponder eingerichtet, den Identifikatoren zugeordnete Komponentenparameter zu empfangen und abzuspeichern, wobei das Steuermodul eingerichtet ist, den Komponentenparametern entsprechende Steuersignale an durch die Identifikatoren bestimmte Komponenten zu übermitteln. Die Komponentenparameter können auf der Steuervorrichtung gespeichert werden und bei Bedarf an die Komponenten übermittelt werden.

In einer Ausführungsform der Steuervorrichtung ist das Steuermodul eingerichtet, Steuersignale an Komponenten zu übermitteln, mit welchen Komponentenparameter der Komponenten abgefragt werden, wobei das Steuermodul eingerichtet ist, den Komponentenparametern entsprechende Steuersignale an durch die Identifikatoren bestimmte Komponenten zu übermitteln. Die Komponentenparameter wie z.B. eine Raumbezeichnung oder ein Maximalfluss können bei der Konfiguration auf der Komponente gespeichert werden und bei Inbetriebnahme der HVAC-Anlage kann die Steuereinheit bei Bedarf diese Komponentenparameter abrufen.

In einer Ausführungsform der Steuervorrichtung ist das Steuermodul eingerichtet, ein Protokoll zu erstellen, welches einen Einschaltzeitpunkt einer Stromversorgung der Steuervorrichtung, einen Abfragezeitpunkt und Status der Verfügbarkeit von Komponenten und/oder Komponentenparameter mit Angabe, ob diese auf dem NFC-Transponder abgespeichert sind oder bei einer Komponente abgefragt wurden enthält. Das Protokoll kann bei Inbetriebnahme der HVAC-Anlage erstellt werden und kann alle notwendigen Angaben enthalten, mit welchen überprüfbar ist, ob die Installation der Komponenten wie geplant durchgeführt wurde.

In einer Ausführungsform der Steuervorrichtung ist das Steuermodul eingerichtet, einen oder mehrere der folgenden Schritte auszuführen: Übermitteln des Protokolls an eine Empfangsvorrichtung, falls eine Kommunikationsverbindung zur Empfangsvorrichtung verfügbar ist, und Abspeichern des Protokolls auf dem NFC-Transponder. Das Protokoll kann an eine Empfangsvorrichtung übermittelt werden oder auf dem NFC-Transponder abgespeichert werden, beispielsweise zur Unterstützung von Servicearbeiten an der HVAC-Anlage. Die Empfangsvorrichtung kann innerhalb oder ausserhalb der HVAC-Anlage angeordnet sein und beispielsweise ein Mobilfunkgerät eines Projektleiters umfassen, der die Installation der HVAC-Anlage überwacht. Alternativ oder zusätzlich kann eine Empfangvorrichtung in einer Zentrale angeordnet sein, in welcher die Installation der HVAC-Anlage überwacht wird.

In einer Ausführungsform der Steuervorrichtung ist das Steuermodul eingerichtet, von den durch die Identifikatoren bestimmten Komponenten Betriebswerte der HVAC-Anlage zu erfassen und Steuersignale an betreffende Komponenten entsprechend der erfassten Betriebswerte zu übermitteln.

In einer Ausführungsform der Steuervorrichtung umfasst diese eine oder mehrere der folgenden Komponenten: eine Sensorvorrichtung der HVAC-Anlage, einen Antrieb der HVAC-Anlage, eine Regelvorrichtung der HVAC-Anlage, ein Raumbediengerät der HVAC-Anlage, ein Gateway für die Kommunikation zwischen verschiedenen Kommunikationsnetzen der HVAC-Anlage, einen Aktor der HVAC-Anlage und eine Schnittstellenvorrichtung für Eingangs- und Ausgangssignale der HVAC-Anlage.

Neben einer Steuervorrichtung für eine HVAC-Anlage bezieht sich die Erfindung auf eine mobile Servicevorrichtung für die Konfiguration einer Steuervorrichtung einer HVAC-Anlage und von einer oder mehreren Komponenten der HVAC-Anlage vor dem Einschalten einer Stromversorgung. Die mobile Servicevorrichtung umfasst: ein Steuermodul, das eingerichtet ist, ein aktives NFC-Modul der mobilen Servicevorrichtung so zu steuern, dass von der einen oder mehreren Komponente ein in einem passiven NFC-Transponder abgespeicherter Identifikator ausgelesen wird, und einer oder mehrere ausgelesene Identifikatoren auf einen passiven NFC-Transponder der Steuervorrichtung geschrieben werden.

In einer Ausführungsform der mobilen Servicevorrichtung ist das Steuermodul so eingerichtet, dass eine Benutzerschnittstelle der mobilen Servicevorrichtung Identifikatoren der Komponenten der HVAC-Anlage anzeigt und diesen zugeordnete Komponentenparameter der Komponenten von einem Benutzer der mobilen Servicevorrichtung entgegennimmt, wobei das Steuermodul zudem so eingerichtet ist, das aktive NFC-Modul so zu steuern, dass Komponentenparameter auf passive Transponder von Komponenten der HVAC-Anlage und/oder auf einen passiven Transponder einer Steuervorrichtung der HVAC-Anlage geschrieben werden.

In einer Ausführungsform der mobilen Servicevorrichtung ist das Steuermodul eingerichtet, mehrere Identifikatoren der Komponenten in eine Gruppe zusammenzufassen, Komponenten der Gruppe verfügbare Gruppen- und Komponentenparameter zuzuordnen, und das NFC-Modul so zu steuern, dass die Gruppe auf den NFC-Transponder einer Steuervorrichtung der HVAC-Anlage geschrieben wird.

In einer Ausführungsform der mobilen Servicevorrichtung ist das Steuermodul eingerichtet, ein Protokoll zu erstellen, welches einen oder mehrere der folgenden Inhalte umfasst: empfangene Identifikatoren von Komponenten der HVAC-Anlage, den Identifikatoren zugeordnete Komponentenparameter, Gruppen mit Identifikatoren und den Identifikatoren zugeordneten Gruppen- und/oder Komponentenparameter, Identifikation einer Bedienperson der Servicevorrichtung, und den genannten Inhalten zugeordnete Zeitstempel, wobei das Steuermodul insbesondere eingerichtet ist, das erstellte Protokoll an eine Empfangsvorrichtung zu übermitteln.

Neben einer Steuervorrichtung und einer mobilen Servicevorrichtung für eine HVAC-Anlage bezieht sich die Erfindung auf ein Verfahren zur Konfiguration einer Steuervorrichtung einer HVAC-Anlage und einer oder mehreren Komponenten der HVAC-Anlage vor dem Einschalten einer Stromversorgung. Das Verfahren umfasst folgende Schritte: Auslesen mit einem aktiven NFC-Modul eines Identifikators von einem passiven NFC-Transponder der einen oder mehreren Komponenten, und Schreiben mit dem aktiven NFC-Modul von ausgelesenen Identifikatoren auf einen passiven NFC-Transponder der Steuervorrichtung.

In einer Ausführungsform des Verfahrens werden auf einer Benutzerschnittstelle identifikatoren angezeigt und zugeordnete Komponentenparameter erfasst, wobei erfasste Komponentenparameter mit dem aktiven NFC-Modul auf einen passiven NFC-Transponder der einen oder mehreren Komponenten und/oder auf den passiven NFC-Transponder der Steuervorrichtung geschrieben werden.

In einer Ausführungsform des Verfahrens wird ein Protokoll erstellt, welches ausgelesene Identifikatoren der einen oder mehreren Komponenten, den Identifikatoren zugeordnete Komponentenparameter, und/oder diesen Inhalten zugeordnete Zeitstempel umfasst, wobei das Protokoll insbesondere an eine Empfangsvorrichtung übermittelt wird.

Neben einer Steuervorrichtung, einer mobilen Servicevorrichtung für eine HVAC-Anlage und einem Verfahren zur Konfiguration einer HVAC-Anlage bezieht sich die Erfindung auf ein Computerprogrammprodukt umfassend ein computer-lesbares Speichermedium mit darauf abgespeichertem Programmcode, welcher eingerichtet ist, einen oder mehrere Prozessoren einer mobilen Servicevorrichtung, welche ein aktives NFC-Modul aufweist, so zu steuern, dass: mit dem aktiven NFC-Modul ein Identifikator von einem passiven NFC-Transponder einer oder mehreren Komponenten einer HVAC-Anlage ausgelesen wird, und mit dem aktiven NFC-Modul ausgelesene Identifikatoren auf einen passiven NFC-Transponder einer Steuervorrichtung der HVAC-Anlage geschrieben wird.

Neben einer Steuervorrichtung, einer mobilen Servicevorrichtung für eine HVAC-Anlage, einem Verfahren zur Konfiguration einer HVAC-Anlage und einem Computerprogrammprodukt bezieht sich die Erfindung auf einen Antrieb für eine HVAC-Anlage, welcher einen Stellantrieb für ein Stellglied der HVAC-Anlage aufweist. Weiter umfasst der Antrieb: einen passiven NFC-Transponder, der eingerichtet ist, vor dem Einschalten einer Stromversorgung des Antriebs einen eindeutigen Identifikator an eine mobile Servicevorrichtung zu übermitteln sowie von der mobilen Servicevorrichtung einen oder mehrere Antriebsparameter zu empfangen und abzuspeichern, und ein Steuermodul, das eingerichtet ist, nach dem Einschalten einer Stromversorgung des Antriebs die Steuerung des Stellantriebs unter Berücksichtigung der einen oder mehreren abgespeicherten Antriebsparameter vorzunehmen.

In einer Ausführungsform des Antriebs umfasst dieser ein Kommunikationsmodul für die Kommunikation mit einer Steuereinrichtung der HVAC-Anlage und das Steuermodul ist eingerichtet, nach dem Einschalten einer Stromversorgung des Antriebs über das Kommunikationsmodul Steuersignale für die Steuerung des Stellantriebs zu empfangen und die Steuerung des Stellantriebs vorzunehmen

In einer Ausführungsform des Antriebs ist das Steuermodul eingerichtet, nach dem Einschalten einer Stromversorgung des Antriebs und bei Empfang über das Kommunikationsmodul eines Steuersignals von einer Steuervorrichtung, mit welchem die Verfügbarkeit des Antriebs überprüft wird, eine Bestätigung an die Steuervorrichtung zu übermitteln.

In einer Ausführungsform des Antriebs ist das Steuermodul eingerichtet, bei Empfang über das Kommunikationsmodul eines Steuersignals von einer Steuervorrichtung, mit welchem der eine oder mehrere Antriebsparameter abgefragt wird, den einen oder mehrere Antriebsparameter an die Steuervorrichtung zu übermitteln.

In einer Ausführungsform des Antriebs ist das Steuermodul eingerichtet, über eine Sensorschnittstelle Betriebswerte der HVAC-Anlage zu erfassen und diese Betriebswerte über die Kommunikationsschnittstelle an eine Steuervorrichtung zu übermitteln.

In einer Ausführungsform des Antriebs weist der NFC-Transponder mehrere unterschiedlich angeordnete Transponderantennen auf. Vorzugsweise sind die Transponderantennen derart an unterschiedlichen Teilen eines Gehäuses des Antriebs angebracht, dass das Zusammenwirken zwischen dem aktiven NFC-Modul der mobilen Servicevorrichtung und dem NFC-Transponder für unterschiedliche Positionen der mobilen Servicevorrichtung relativ zum Antrieb gewährleistet ist.

In einer Ausführungsform des Antriebs weist der NFC-Transponder zwei Transponderantennen auf, welche derart am oder im Gehäuse des Antriebs angebracht sind, dass mindestens eine der beiden Transponderantennen nach Montage des Antriebs frei zugänglich bleibt, insbesondere auf einer einer Wand oder Decke abgewandten Seite des Gehäuses des Antriebs.

In einer Ausführungsform des Antriebs ist der passive NFC-Transponder eingerichtet, Antriebsparameter von mehreren Antrieben der HVAC-Anlage zu empfangen und abzuspeichern.

### KURZE BESCHREIBUNG DER ZEICHNUNGEN

Anhand von Figuren, welche lediglich Ausführungsbeispiele darstellen, wird die Erfindung im Folgenden erläutert. Es zeigen:
- Fig. 1: schematisch eine Steuervorrichtung einer HVAC-Anlage;
- Fig. 2: schematisch eine mobile Servicevorrichtung für die Konfiguration einer HVAC-Anlage;
- Fig. 3: schematisch einen Antrieb mit einem passiven NFC-Transponder welcher sich im Wirkbereich eines aktiven NFC-Moduls einer mobilen Servicevorrichtung befindet;
- Fig. 4: schematisch eine Steuervorrichtung mit einem passiven NFC-Transponder welcher sich im Wirkbereich eines aktiven NFC-Moduls einer mobilen Servicevorrichtung befindet;
- Fig. 5: schematisch einen Installationsplan für Antriebe und eine Steuervorrichtung einer HVAC-Anlage;
- Fig. 6: schematisch ein Flussdiagramm mit möglichen Schritten zum Konfigurieren einer HVAC-Anlage; und
- Fig. 7: schematisch einen Antrieb mit einem passiven NFC-Transponder und mehreren Transponderantennen.

### WEG(E) ZUR AUSFÜHRUNG DER ERFINDUNG

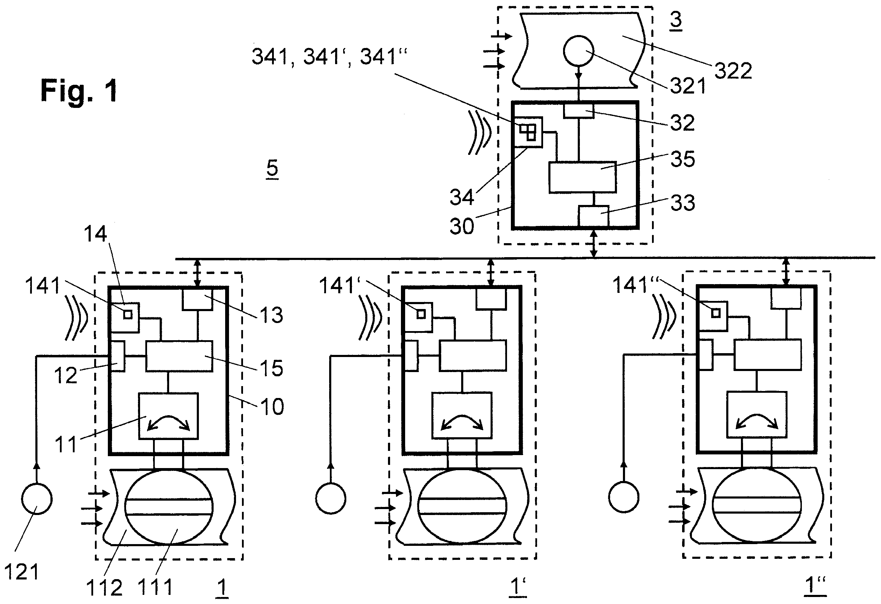

Figur 1 zeigt schematisch eine Steuervorrichtung 3 einer HVAC-Anlage 5 und mehrere Komponenten der HVAC-Anlage 5. Die Komponenten sind im in Figur 1 dargestellten Beispiel als Antriebe 1, 1', 1" ausgeführt.

Die HVAC-Anlage 5 umfasst ein Fluidtransportsystem mit Wasserleitungen oder Luftkanälen, durch welche flüssiges oder gasförmiges Fluid transportiert wird. Die in Figur 1 dargestellten Steuervorrichtung 3 und die Antriebe 1, 1', 1" sind für den Betrieb einer solchen HVAC-Anlage 5 eingerichtet, wobei insbesondere HVAC-Betriebswerte wie Durchfluss, Temperatur, etc. erfasst und auf der Steuervorrichtung 3 verarbeitet werden, um die Antriebe 1, 1', 1" zu steuern.

In Figur 1 sind für eine bessere Übersicht nur Bezugszeichen für den Antrieb mit dem Bezugszeichen 1 eingezeichnet. Für die Antriebe mit den Bezugszeichen 1' und 1" ist nur eines der wichtigsten Bezugszeichen aufgeführt. Die in Figur 1 schematisch dargestellten Bestandteile der Antriebe 1, 1', 1" werden nachfolgend für den Antrieb mit dem Bezugszeichen 1 dargestellt, gelten jedoch für die Antriebe mit den Bezugszeichen 1' und 1" entsprechend. Nachfolgend sind mit dem Begriff "die Antriebe 1" immer die in Figur 1 dargestellten drei Antriebe mit den Bezugszeichen 1, 1', 1" gemeint.

Im in Figur 1 gezeigten Beispiel sind drei Antriebe 1 dargestellt. Die Erfindung bezieht sich jedoch auf eine beliebige Anzahl Antriebe 1.

Die Steuervorrichtung 3 und die Antriebe 1 weisen Kommunikationsmodule 33, 13 auf. Die Kommunikationsmodule 33, 13 sind über ein Kommunikationsmedium miteinander verbunden und eingerichtet, Steuersignale zwischen der Steuervorrichtung 3 und den Antrieben 1 zu übermitteln. Das Kommunikationsmedium umfasst beispielsweise Kabel wie z.B. ein Belimo MP-Bus Kabel, funkbasierte Medien wie z.B. GSM oder WLAN (GSM: Global System for Mobile Communication, WLAN: Wireless Local Area Network), optische Datenverbindungen, etc. Die Kommunikationsmodule und das Kommunikationsmedium sind insbesondere gemäss einem oder mehreren der folgenden Standards eingerichtet: Belimo MP-Bus, LonWorks, Modbus RTU, EIB/Konnex, BACnet und/oder Profibus DP. Die Steuersignale definieren Funktionen, welche für den Betrieb der HVAC-Anlage 5 erforderlich sind, beispielsweise Funktionen mit welchen die Steuervorrichtung 3 ein Stellsignal zur Einstellung einer Antriebsposition an die Antriebe 1 oder die Antriebe 1 ein Statussignal über die eingestellte Position an die Steuervorrichtung 3 übermitteln können.

Wie in Figur 1 schematisch gezeigt, weisen die Steuervorrichtung 3 und die Antriebe 1 Steuermodule 35, 15 auf. Die Steuermodule 35, 15 umfassen beispielsweise Mikroprozessoren und darauf ausführbare Programme, ASICs (ASIC: Application-specific integrated circuit) oder andere elektronische Schaltungen, mit welchen die für den Betrieb der Steuervorrichtung 3 und den Betrieb der Antriebe 1 erforderlichen Funktionen, welche nachfolgend im einzelnen erläutert werden, ermöglicht werden. Wie in Figur 1 schematisch dargestellt, sind das Steuermodul 35, 15 und die HVAC-Schnittstelle 33, 13 der Steuervorrichtung 3 sowie der Antriebe 1 jeweils in einem Gehäuse 30, 10 untergebracht.

Die Steuervorrichtung 3 umfasst in einer Ausführungsvariante einen Fluidanschluss 322, welcher für den Anschluss an das Fluidtransportsystem der HVAC-Anlage 5 eingerichtet ist. Der Fluidanschluss 322 ist beispielsweise als Wasserrohr oder Luftkanal ausgeführt, deren beiden Enden an weitere Wasserrohre oder Luftkanäle der HVAC-Anlage 5 angeschlossen werden können. Der Fluidanschluss 322 kann am Gehäuse 30 der Steuervorrichtung 3 angebracht sein, welche zusammen eine in Figur 1 gestrichelt dargestellte Einheit bilden. Wie in Figur 1 gezeigt umfasst der Fluidanschluss 322 einen Fluidsensor 321, mit welchem beispielsweise die Durchflussmenge, die Temperatur, etc. des Fluids gemessen wird. Der Fluidsensor 321 ist über eine Signalleitung mit einer Sensorschnittstelle 32 der Steuervorrichtung 3 verbunden. Die Sensorschnittstelle 32 ist beispielsweise am Gehäuse 30 der Steuervorrichtung 3 angebracht.

Ein Antrieb 1 umfasst in einer Ausführungsvariante einen Fluidanschluss 112, welcher für den Anschluss an das Fluidtransportsystem der HVAC-Anlage 5 eingerichtet ist. Der Fluidanschluss 112 ist beispielsweise als Wasserrohr oder Luftkanal ausgeführt, deren beiden Enden an weitere Wasserrohre oder Luftkanäle der HVAC-Anlage 5 angeschlossen werden können. Der Fluidanschluss 112 kann am Gehäuse 10 des Antriebs 1 angebracht sein, so dass das Gehäuse 10 und der Fluidanschluss 1 12 zusammen eine in Figur 1 gestrichelt dargestellte Einheit bilden. Wie in Figur 1 gezeigt, umfasst der Fluidanschluss 112 ein Stellglied 1 1 1, mit welchem insbesondere die Durchflussmenge des Fluids beeinflusst wird. Das Stellglied 111 kann als Wasserventil oder als Luftklappe ausgeführt sein. Das Stellglied 111 ist mit einem Stellantrieb 11 des Antriebs 1 wirkverbunden. Der Stellantrieb 11 ist beispielsweise im Gehäuse 10 des Antriebs 1 untergebracht. Der Stellantrieb 11 umfasst einen Motor, einen Elektromotor, eine Ölpumpe, etc. mit welchen eine mechanische Kraft erzeugt wird, um das im Fluidanschluss 112 angeordnete Stellglied 111 in eine erforderliche Position zu bewegen.

Die Antriebe 1 umfassen in einer Ausführungsvariante eine Sensorschnittstelle 12, welche beispielsweise am Gehäuse 10 der Antriebe 1 angeordnet ist. An der Sensorschnittstelle 12 lässt sich über eine Signalleitung ein Sensor 121 anschliessen, um Betriebswerte der HVAC-Anlage 5 wie beispielsweise Temperatur, Durchflussmenge, etc. der HVAC-Anlage 5 zu erfassen.

Wie in Figur 1 schematisch dargestellt, ist bei der Steuervorrichtung 3 das Steuermodul 35 mit dem Kommunikationsmodul 33 und der Sensorschnittstelle 32 verbunden. Entsprechend sind bei den Antrieben 1 das Steuermodul 15 mit dem Kommunikationsmodul 13, dem Stellantrieb 11 und der Sensorschnittstelle 12 verbunden.

Wie in Figur 1 schematisch gezeigt, umfassen die Steuervorrichtung 3 und die Antriebe 1 passive NFC-Transponder 34, 14. Die passiven NFC-Transponder 34, 14 sind beispielsweise als passive RFID-Tags nach ISO 14443 oder ISO 15693 ausgeführt. Die passiven NFC-Transponder umfassen insbesondere mindestens eine Transponderantenne, welche am oder im Gehäuse 30, 10 der Steuervorrichtung und der Antriebe 1 angebracht sein können, sowie elektronische Schaltkreise wie insbesondere einen nicht-flüchtigen Datenspeicher. Mit einem aktiven NFC-Modul lassen sich auf den passiven NFC-Transponder Daten speichern und wieder auslesen, wobei beim Lesen und Schreiben die elektronischen Schaltkreise des passiven NFC-Transponders über induktive Kopplung vom aktiven NFC-Modul mit Energie versorgt werden. Die im Datenspeicher des passiven NFC-Transponders abgespeicherten Daten bleiben nach dem Schreiben auch ohne Energieversorgung erhalten.

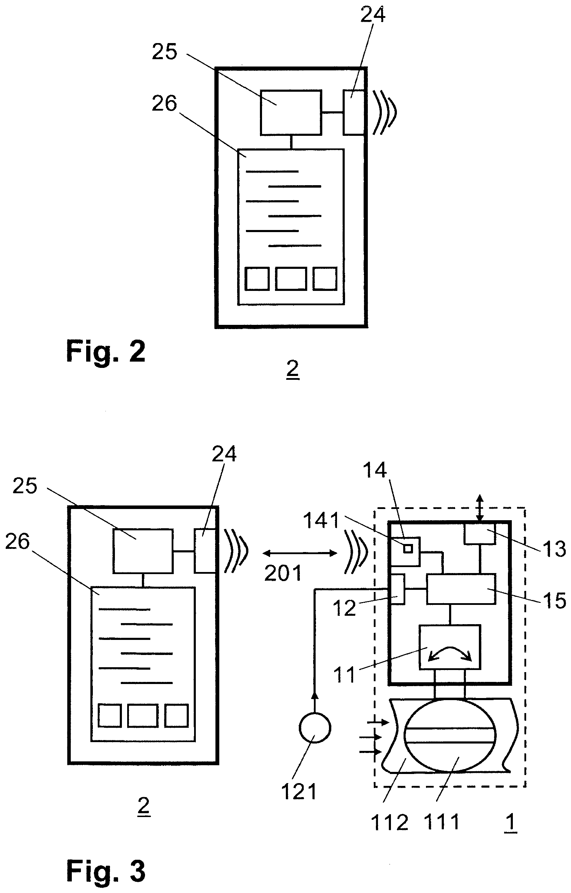

Der passive NFC-Transponder 14 eines Antriebs 1 ist eingerichtet, vor dem Einschalten einer Stromversorgung des Antriebs 1 einen eindeutigen Identifikator 141 an eine in Figur 2 dargestellte und nachfolgend noch weiter beschriebene mobile Servicevorrichtung 2 zu übermitteln sowie von der mobilen Servicevorrichtung 2 einen oder mehrere Antriebsparameter zu empfangen und abzuspeichern. Der eindeutige Identifikator kann beispielsweise eine Seriennummer des Antriebs 1 umfassen. Die Antriebsparameter, welche nachfolgend noch weiter beschrieben werden, können beispielsweise einen Maximalfluss, eine Raumbezeichnung, etc. umfassen.

Das Steuermodul 15 ist eingerichtet, nach dem Einschalten einer Stromversorgung des Antriebs 1 über das Kommunikationsmodul 13 Steuersignale für die Steuerung des Stellantriebs 11 zu empfangen und die Steuerung des Stellantriebs unter Berücksichtigung der einen oder mehreren Antriebsparameter vorzunehmen, beispielsweise unter Berücksichtigung eines Maximalfluss.

Der NFC-Transponder 34 der Steuervorrichtung 3 ist eingerichtet, vor dem Einschalten einer Stromversorgung der Steuervorrichtung 3 von einer in Figur 2 dargestellten und nachfolgend noch weiter beschriebenen mobilen Servicevorrichtung 2 eindeutige Identifikatoren 341 der Antriebe 1 zu empfangen und abzuspeichern. Die mobile Servicevorrichtung weist insbesondere ein aktives NFC-Modul 24 auf, welches die eindeutigen Identifikatoren 341 auf den NFC-Transponder 34 der Steuervorrichtung 3 schreibt.

Das Steuermodul 35 der Steuervorrichtung 3 ist eingerichtet, nach dem Einschalten einer Stromversorgung der Steuervorrichtung 3 auf abgespeicherte Identifikatoren 341, 341', 341" zuzugreifen und über das Kommunikationsmodul 33 Steuersignale an durch die Identifikatoren bestimmten Komponenten zu übermitteln. Wie in Figur 1 dargestellt ist das Steuermodul 35 mit dem NFC-Transponder über eine Signalleitung verbunden, um die im NFC-Transponder abgespeicherten Identifikatoren 341, 341', 341" auszulesen.

Beim Einschalten einer Stromversorgung der Steuervorrichtung 3 wird das Kommunikationsmodul 33 aufgrund der abgespeicherten Identifikatoren 341, 341', 341" derart konfiguriert, dass eine Kommunikation Antrieben 1 ermöglicht ist, welche mit dem Kommunikationsmodul 33 über ein Kommunikationsmedium verbundenen sind.

Bei der Installation einer HVAC-Anlage 5 wird aus Effizienz- und Qualitätsgründen etappenweise vorgegangen. Beispielsweise werden in einer ersten Etappe von spezialisierten Fachkräften Wasserleitungen oder Lüftungskanäle der HVAC-Anlage 5 installiert. In einer zweiten Etappe werden mit anderen spezialisierten Fachkräften Steuervorrichtungen und Antriebe installiert. In einer dritten Etappe wird wieder mit anderen spezialisierten Fachkräften eine elektrische Energieversorgung für die HVAC-Anlage 5 installiert. Und in einer vierten Etappe wird beispielsweise von den Fachkräften der zweiten Etappe die HVAC-Anlage 5 konfiguriert und in Betrieb genommen, wobei die Fachkräfte insbesondere jede der Steuervorrichtung und jeden den Antrieb erneut aufsuchen müssen, um Einstellungen vorzunehmen, welche in der zweiten Etappe wegen mangelnder Energieversorgung noch nicht durchgeführt werden konnten.

Bei der Steuereinrichtung 3 und den Antrieben 1 gemäss Figur 1 können alle erforderlichen Konfigurationen in der zweiten Etappe abgeschlossen werden, indem zunächst die Identifikatoren der Antriebe 1 gelesen und Antriebsparameter auf den NFC-Transponder 14 geschrieben werden und die gelesenen Identifikatoren auf den NFC-Transponder der Steuereinrichtung 3 geschrieben werden. Falls erforderlich, werden zusätzliche Konfigurationsdaten auf die NFC-Transponder der Steuereinrichtung 3 und der Antriebe 1 geschrieben. Damit können von den dafür spezialisierten Fachkräften alle Arbeiten, welche das Aufsuchen der einzelnen Steuereinrichtungen und Antriebe der HVAC-Anlage 5 erfordern, schon in der zweiten Etappe abgeschlossen werden. Ein Aufsuchen der Steuereinrichtungen und Antriebe in der vierten Etappe bei der Inbetriebnahme der HVAC-Anlage 5 ist damit nicht mehr erforderlich. Die Effizienz und Qualität bei der Installation von HVAC-Anlagen kann dadurch verbessert werden.

Figur 2 zeigt eine mobile Servicevorrichtung 2 für die Konfiguration einer Steuervorrichtung 3 einer HVAC-Anlage 5 und von einer oder mehreren Komponenten der HVAC-Anlage 5 vor dem Einschalten einer Stromversorgung. Nachfolgend wird die mobile Servicevorrichtung 2 im Zusammenhang von Komponenten dargestellt, welche als Antriebe 1 ausgeführt sind. Die mobile Servicevorrichtung 2 umfasst ein Steuermodul 25, das eingerichtet ist, ein aktives NFC-Modul 24 der mobilen Servicevorrichtung 2 so zu steuern, dass von einem oder mehreren Antrieben 1 ein in einem passiven NFC-Transponder abgespeicherter Identifikator ausgelesen wird, und einer oder mehrere ausgelesene Identifikatoren auf einen passiven NFC-Transponder der Steuervorrichtung 3 geschrieben werden. Wie in Figur 2 schematisch dargestellt, umfasst die mobile Servicevorrichtung eine Benutzerschnittstelle 26 mit einem Touchscreen, einem Display mit Tastatur, etc. Die Benutzerschnittstelle ist eingerichtet, Identifikatoren und Antriebsparameter anzuzeigen sowie Werte für Antriebsparameter entgegenzunehmen. In einer Ausführungsvariante umfasst die mobile Servicevorrichtung 2 ein geeignet programmiertes Mobiltelefon, Smartphone, etc. mit einem aktiven NFC-Modul, welches mit Energie aus der Batterie des betreffenden Geräts versorgt wird.

Figur 3 zeigt schematisch eine mobile Servicevorrichtung 2, wobei das aktive NFC-Modul über die Wirkverbindung 201 mit dem NFC-Transponder 14 eines Antriebs 1 einer HVAC-Anlage 5 zusammenwirkt, insbesondere um den eindeutigen Identifikator 141 des Antriebs 1 auszulesen und Antriebsparameter zu lesen und zu schreiben.

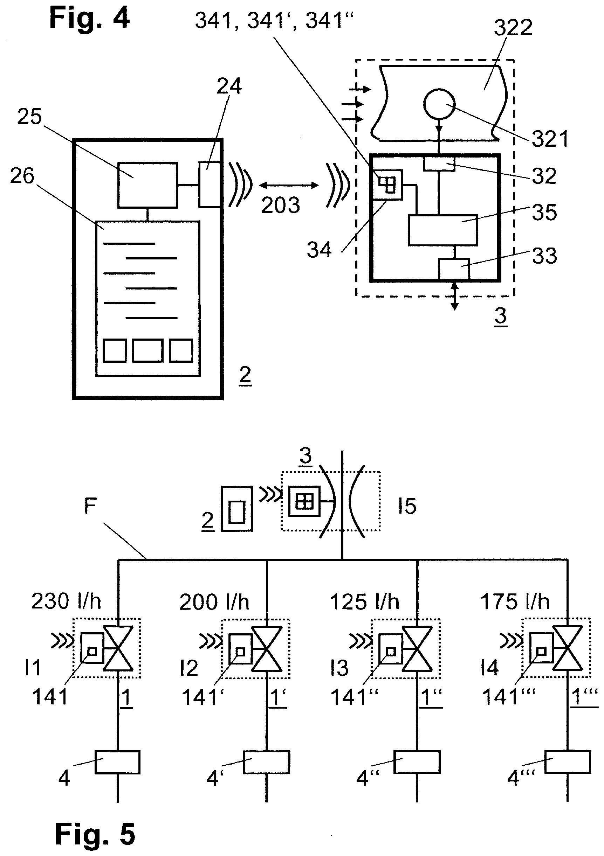

Figur 4 zeigt schematisch eine mobile Servicevorrichtung 2, wobei das aktive NFC-Modul über die Wirkverbindung 203 mit dem NFC-Transponder 34 einer Steuervorrichtung 3 einer HVAC-Anlage 5 zusammenwirkt, insbesondere um Identifikatoren 341, 341', 341" und/oder Antriebsparameter auf den NFC-Transponder 34 zu schreiben.

Figur 5 zeigt schematisch eine HVAC-Anlage 5, welche eine Steuereinrichtung 3 und vier Antriebe 1, 1', 1", 1‴ umfasst, um im Fluidsystem F Verbraucher 4, 4', 4", 4‴ der HVAC-Anlage 5 mit einem erforderlichen Fluidstrom zu versorgen. Während der oben dargestellten zweiten Etappe erfolgt die Installation und Konfiguration der Antriebe 1, 1', 1", 1‴, wobei die Steuereinrichtung 3 und die Antriebe 1, 1', 1", 1‴ noch an keiner Stromversorgung angeschlossen sind.

Wie in Figur 5 dargestellt, installiert der Facharbeiter zunächst im Installationsschritt 11 den ersten Antrieb 1. Mit der mobilen Servicevorrichtung 2 erfasst der Facharbeiter den eindeutigen Identifikator 141 des Antriebs 1. Auf der Benutzerschnittstelle der mobilen Servicevorrichtung 2 legt der Facharbeiter einen Maximalfluss für den Antriebs 1 fest und ordnet diese dem Identifikator 141 zu. Der Maximalfluss beträgt im Beispiel gemäss Figur 5 230 l/h. Weiter ordnet der Facharbeiter dem Identifikator 141 eine Raumbezeichnung zu. Der Maximalfluss und die Raumbezeichnung werden auf der mobilen Servicevorrichtung 2 gespeichert.

In den Installationsschritten I2, I3, 14 installiert der Facharbeiter analog die Antriebe 1', 1", 1‴, wobei Maximalflüsse von im gezeigten Beispiel 200 l/h, 125 l/h und 175 l/h den Identifikatoren 141', 141", 141‴ zugeordnet zusammen mit Raumbezeichnungen auf der mobilen Serviceanordnung 2 gespeichert werden.

Im Installationsschritt 15 installiert der Facharbeiter die Steuervorrichtung 3, welche wie schematisch angedeutet einen Durchflusssensor aufweist, um den Gesamtdurchfluss im Fluidsystem F durch die Verbraucher 4, 4', 4", 4‴ zu messen. Ferner schreibt der Facharbeiter mit der mobilen Servicevorrichtung die bei den Antrieben 1, 1', 1", 1‴ gesammelten Identifikatoren, Maximalflüsse und Raumbezeichnungen auf den NFC-Transponder der Steuervorrichtung 3.

Damit sind die Installationsarbeiten für den Facharbeiter abgeschlossen. Ein bei den durchgeführten Arbeiten automatisch auf der mobilen Servicevorrichtung 2 erstelltes Protokoll wird gegebenenfalls automatisch an eine Empfangsvorrichtung übermittelt, beispielsweise eines Projektleiters der die Installationsarbeiten koordiniert. Die Übermittlung kann beispielsweise über ein Mobilfunknetz erfolgen, oder über irgendeine andere Kommunikationseinrichtung.

Beim Lesen und Schreiben von Daten auf die NFC-Transponder der mobilen Servicevorrichtung 2 oder Antriebe 1 muss die mobile Servicevorrichtung 2 beispielsweise nur an ein Gehäuse gehalten werden. Sobald ein NFC-Transponder von der mobilen Servicevorrichtung 2 detektiert wird, kann beispielsweise das Lesen der identifikatoren im Falle eines Antriebs oder das Schreiben von Identifikatoren im Falle einer Steuervorrichtung automatisch ablaufen und dem Facharbeiter mit einem akustischen Signal quittiert werden. Der NFC Wirkbereich, bei welchem ein NFC-Transponder detektiert werden kann, beträgt wenige Zentimeter, beispielsweise weniger als 10 cm oder weniger als 4cm.

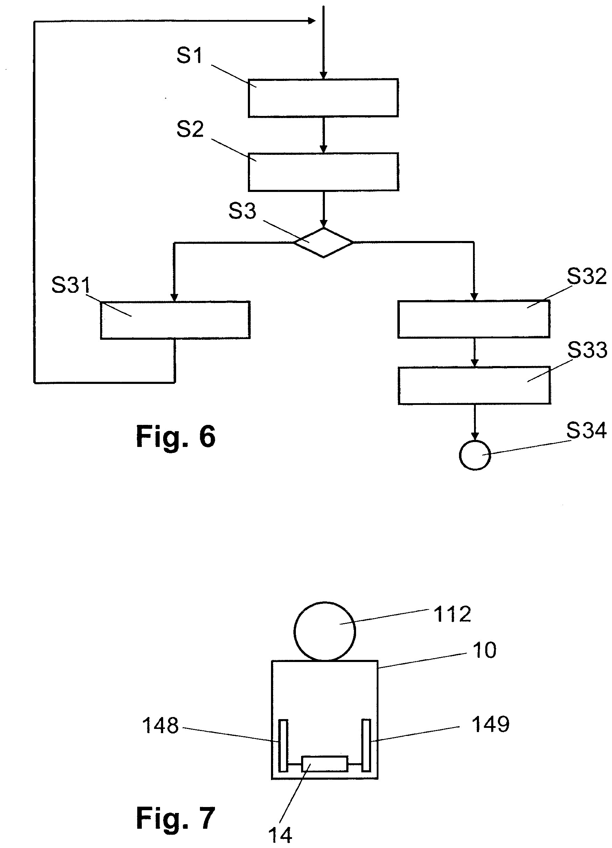

Figur 6 zeigt schematisch ein Flussdiagramm mit einer Sequenz möglicher Schritte zum Konfigurieren einer Steuervorrichtung 3 einer HVAC-Anlage 5 und einer oder mehreren Komponenten der HVAC-Anlage 5 vor dem Einschalten einer Stromversorgung. Die Komponenten sind im dargestellten Beispiel als Antriebe 1 ausgeführt. Im Schritt S1 wird auf der mobilen Servicevorrichtung 2 detektiert, ob sich ein passiver NFC-Transponder 34, 14 im Wirkbereich eines aktiven NFC-Moduls befindet. Im Schritt S2 wird mit dem aktiven NFC-Modul ein eindeutiger Identifikator aus dem passiven NFC-Transponder 34, 14 ausgelesen. Im Schritt S3 wird der eindeutige Identifikator analysiert und es wird ermittelt, ob es sich um eine Steuervorrichtung 3 oder um einen Antrieb 1 handelt. Falls es sich um einen Antrieb 1 handelt, wird Schritt S31 ausgeführt. Falls es sich um eine Steuervorrichtung 3 handelt, wird Schritt S32 ausgeführt. Im Schritt S31 wird der eindeutige Identifikator auf einer Benutzerschnittstelle der mobilen Serviceeinrichtung 2 angezeigt und es werden Antriebsparameter des Antriebs erfasst. Nach dem Erfassen der Antriebsparameter werden diese optional mit dem aktiven NFC-Modul auf den NFC-Transponder des Antriebs geschrieben. Nach dem Schritt S31 wird das Verfahren mit dem Schritt S1 fortgesetzt und es wird detektiert, ob sich ein passiver NFC-Transponder 34, 14 im Wirkbereich des aktiven NFC-Moduls befindet. Nach dem Schritt S3 wird der Schritt S32 ausgeführt, falls die Analyse des Identifikators ergibt, dass es sich um eine Steuervorrichtung 3 handelt. Im Schritt S32 werden Identifikatoren, welche nach mehrmaliger Durchführung des Schritts S31 gesammelt wurden, sowie die entsprechend erfassten Antriebsparameter mit dem aktiven NFC-Modul auf den passiven NFC-Transponder der Steuervorrichtung 3 geschrieben. Nach dem Schritt S32 wird optional im Schritt S33 ein Protokoll, welches die durchgeführten Schritte enthält, an eine Empfangsvorrichtung übermittelt. Damit sind die Antriebe 1 und die Steuervorrichtung 3 konfiguriert, dass bei Einschalten einer Stromversorgung die HVAC-Anlage 5 nach definierten Vorgaben gesteuert werden kann. Im Schritt S34 wird das Verfahren damit abgeschlossen.

In einer Variante können vor dem Einschalten einer Stromversorgung die Antriebsparameter im Schritt S31 jeweils auf den NFC-Transponder des Antriebs 1 geschrieben werden und im Schritt S32 können nur die Identifikatoren auf den NFC-Transponder der Steuervorrichtung 3 geschrieben werden. Nach dem Einschalten einer Stromversorgung können die Antriebsparameter, falls erforderlich, von der Steuervorrichtung 3 bei den Antrieben 1 abgefragt werden.

In einer anderen Variante werden vor dem Einschalten einer Stromversorgung keine Antriebsparameter im Schritt S31 auf den NFC-Transponder des Antriebs 1 geschrieben und im Schritt S32 werden Identifikatoren und entsprechende Antriebsparameter auf den NFC-Transponder der Steuervorrichtung 3 geschrieben. Nach dem Einschalten einer Stromversorgung können die Antriebsparameter, falls erforderlich, von der Steuervorrichtung 3 an die Antriebe 1 übermittelt werden.

Figur 7 zeigt ein Gehäuse 10 eines Antriebs 1 mit daran angebrachtem Fluidanschluss 112. Von den oben beschriebenen Bestandteilen des Antriebs 1 ist in Figur 7 nur der passive NFC-Transponder 14 schematisch dargestellt. Nach dem Anschliessen des Fluidanschlusses 112 an die HVAC-Anlage 5, muss in einem nächsten Schritt die mobile Servicevorrichtung 2 in den Wirkbereich des NFC-Transponders 14 gebracht werden. Je nach Umgebung am Installationsort, ist der Antrieb 1 nicht von allen Seiten frei zugänglich. Damit die Wirkverbindung zwischen dem aktiven NFC-Modul der mobilen Servicevorrichtung 2 und dem NFC-Transponder 14 des Antriebs gewährleistet ist, sind im Antrieb 1 mehrere Transponderantennen 149, 148 vorgesehen, welche an verschieden Gehäuseseiten angeordnet sind. In Figur 7 sind zwei Transponderantennen 149, 148 dargestellt, es ist jedoch auch möglich drei oder mehr Transponderantennen 149, 148 anzuordnen. Befindet sich der Antrieb 1 beispielsweise in einer Ecke die aus einer Decke und einer Wand gebildet wird, dann ist gewährleistet, dass eine der Transponderantenne 149, 148 gut zugänglich ist und die Wirkverbindung zwischen dem aktiven NFC-Modul der mobilen Servicevorrichtung 2 und dem Antrieb 1 gut erstellt werden kann. In analoger Weise sind vorzugsweise an der Steuervorrichtung 3 und anderen Komponenten der HVAC-Anlage 5 jeweils mehrere Transponderantennen angebracht.

Die Antriebsparameter, wie sie oben beschrieben wurden, beziehen sich auf einen oder mehrere der folgenden les- und/oder schreibbaren Parameter: Kommunikationsadresse des Antriebs wie z.B. eine MP-Bus Adresse etc., Installationsort wie z.B. Raumangabe etc., Ansprechempfindlichkeit und Umkehrhysterese, Art eines Rückmeldesignals, Positionsbereich innerhalb der mechanischen Begrenzungen, Laufzeit bezogen auf den Arbeitsbereich, Drehwinkel, Drehrichtung, Hub, Hubrichtung, Arbeitsdrehmoment relativ zum maximal möglichen Drehmoment, Arbeitsstellkraft relativ zur maximalen Stellkraft, Notstellposition, Zeitverzögerung bis Notstellposition nach Stromausfall angefahren wird, Zähler zum Erfassen einer Anzahl Spannungsunterbrüche, Definition eines Verhaltens falls das Kommunikationsmodul oder die Kommunikationsverbindung ausfällt, Definition eines Verhaltens beim Einschalten einer Stromversorgung, Definition eines Verhaltens bei Betätigung von Tasten des Antriebs.

Die Antriebsparameter beziehen sich ferner auf die folgenden nur lesbaren Parameter: eindeutiger Identifikator wie z.B. eine Seriennummer, Version der Firmware, gesamte Betriebszeit während der der Antrieb an einer Stromversorgung angeschlossen war, Aktivzeit während der der Antrieb mechanische Arbeit verrichtet hat, Stop&Go Verhältnis d.h. das Verhältnis zwischen Betriebszeit und Aktivzeit, und Fehlermeldung wie z.B. das Auftreten von Überlastereignissen oder die Veränderung des Stellbereichs.

Die Antriebsparameter beziehen sich ferner auf Temperatur, Feuchtigkeit, CO2 Anteil oder andere Sensorwerte, wie sie von am Antrieb angeschlossenen Sensoren erfasst werden.

Die Antriebsparameter beziehen sich im Fall eines VAV Antriebs (VAV: variable air volume) ferner auf die folgenden les- und schreibbaren Parameter: der boxen- oder herstellerspezifische Parameter Δp@Vnom, Betriebseinstellungen des Volumenstroms (minimal, nominal und maximal) und Definition des Verhaltens bei Betätigung der Ausrasttaste für das Getriebe.

Die Antriebsparameter beziehen sich im Fall eines EPIV Antriebs (EPIV: Electronic Pressure Independent Valve) ferner auf die folgenden les- und schreibbaren Parameter: Durchflussregelung oder Open Loop Betrieb, Stellsignal invertiert oder nicht-invertiert, nichtlineare Kennlinien (Volumen, Prozentangaben, Volumen pro Zeiteinheit), Art eines Rückmeldesignals, Grösse des Ventils und Betriebseinstellungen (minimal, nominal, maximal).

Auf einer Steuereinrichtung können folgende les- und schreibbaren Parameter vorgesehen sein: Installationsort wie z.B. Raumangabe etc., Liste von Identifikatoren wie z.B. Seriennummern der Antriebe, Gruppenbezeichnung, Betriebszustand und Definition von Fehlerfunktionen/Zusatzmeldungen.

In einer Variante des Antriebs 1 ist der passive NFC-Transponder eingerichtet, Antriebsparameter von mehreren Antrieben 1 der HVAC-Anlage 5 zu empfangen und abszuspeichern. Somit sind die Antriebsparameter der Antriebe der HVAC-Anlage 5 redundant in den Antrieben 1 abgespeichert. Es können zusätzlich weitere Parameter von Komponenten der HVAC-Anlage 5 redundant in den NFC-Transponder der Antriebe 1 abgespeichert werden, beispielsweise Daten welche die Struktur der HVAC-Anlage 5 beschreiben, etc. Beim Einschalten einer Stromversorgung genügt es, dass die Steuereinrichtung 3 die Daten eines einzigen Antriebs 1 auslesen kann, um auf die Antriebsparameter aller Antriebe zugreifen zu können. Dadurch ergibt sich insbesondere ein robustes Verhalten beim Einschalten der HVAC-Anlage, da einzelne angeschlossene Antriebe nicht durch ein gegebenenfalls kompliziertes Kommunikationsprotokoll gesucht werden müssen.

Wie erwähnt kann der NFC-Transponder ausserhalb des Gehäuses eines Antriebs 1 oder einer Steuervorrichtung 3 angeordnet sein, wobei der NFC-Transponder über ein Kabel mit dem Antrieb 1 oder der Steuervorrichtung 3 verbunden ist. Dadurch kann die Zugänglichkeit zum NFC-Transponder mit der mobilen Serviceeinrichtung 2 verbessert werden. Dies sowohl vor als auch nach dem Einschalten einer Stromversorgung.

In einer Variante kann an der Steuervorrichtung 3 oder am Antrieb 1 ein NFC-Extender vorgesehen werden, welcher nach dem Einschalten einer Stromversorgung aktiviert wird. Der NFC-Extender umfasst ein aktives NFC-Modul sowie irgendeine Extender-Schnittstelle wie z.B. Bluetooth, WLAN, etc. Das aktive NFC-Modul und die Extender-Schnittstelle werden nach dem Einschalten der Stromversorgung aktiv, um von der mobilen Serviceeinrichtung über die Extender-Schnittstelle sowie das aktive NFC-Modul eine Konfigurationsverbindung zwischen der mobilen Serviceeinrichtung 2 und dem NFC-Transponder für das Lesen und Schreiben von Daten zu erstellen. Dadurch können Servicearbeiten im Betrieb der HVAC-Anlage vereinfacht werden, da die mobile Serviceeinrichtung 2 nicht unmittelbar zum Antrieb 1 oder zur Steuereinrichtung 3, welche oft nur mit einer Leiter zugänglich sind, gebracht werden muss.

### BEZUGSZEICHEN

- 1: Antrieb der HVAC-Anlage
- 10: Gehäuse des Antriebs
- 11: Stellantrieb
- 111: Stellglied
- 112: Fluidanschluss des Antriebs
- 12: Sensorschnittstelle des Antriebs
- 121: Sensor, anschliessbar an Sensorschnittstelle des Antriebs
- 13: Kommunikationsmodul des Antriebs
- 14: passiver NFC-Transponder des Antriebs
- 141: eindeutiger Identifikator abgespeichert auf dem NFC-Transponders des Antriebs
- 15: Steuermodul des Antriebs
- 2: mobile Servicevorrichtung
- 24: aktives NFC-Modul der mobilen Servicevorrichtung
- 25: Steuermodul der mobilen Servicevorrichtung
- 26: Benutzerschnittstelle der mobilen Servicevorrichtung
- 3: Steuervorrichtung der HVAC-Anlage
- 30: Gehäuse der Steuervorrichtung
- 32: Sensorschnittstelle der Steuervorrichtung
- 321: Fluidsensor der Steuervorrichtung
- 322: Fluidanschluss der Steuervorrichtung
- 33: Kommunikationsmodul der Steuervorrichtung
- 34: passiver NFC-Transponder der Steuervorrichtung
- 341: eindeutiger Identifikator abgespeichert auf dem NFC-Transponder der Steuervorrichtung
- 35: Steuermodul der Steuervorrichtung
- 4: Verbraucher der HVAC-Anlage
- 5: HVAC-Anlage
- F: Fluidsystem der HVAC-Anlage

## Patentansprüche

1. Antrieb (1) für eine HVAC-Anlage (5), wobei der Antrieb (1) ein Gehäuse und einen Motor zum Bewegen eines Stellglieds (112) der HVAC-Anlage (5) aufweist, **gekennzeichnet durch**:
einen passiven NFC-Transponder (14), der mehrere unterschiedlich angeordnete Transponderantennen aufweist und eingerichtet ist, vor dem Einschalten einer Stromversorgung des Antriebs (1) einen eindeutigen Identifikator (141) an eine mobile Servicevorrichtung (2) zu übermitteln sowie von der mobilen Servicevorrichtung (2) einen oder mehrere Antriebsparameter zu empfangen und abzuspeichern, und
ein Steuermodul (15), das eingerichtet ist, nach dem Einschalten einer Stromversorgung des Antriebs (1) die Steuerung des Motors unter Berücksichtigung der einen oder mehreren abgespeicherten Antriebsparameter vorzunehmen.

2. Antrieb (1) nach Anspruch 1, weiter umfassend ein Kommunikationsmodul (13) für die Kommunikation mit einer Steuereinrichtung der HVAC-Anlage (5), **dadurch gekennzeichnet, dass** das Steuermodul (15) eingerichtet ist, nach dem Einschalten einer Stromversorgung des Antriebs (1) über das Kommunikationsmodul (13) Steuersignale für die Steuerung des Motors zu empfangen und die Steuerung des Motors vorzunehmen.

3. Antrieb (1) nach Anspruch 2, **dadurch gekennzeichnet, dass** das Steuermodul (15) eingerichtet ist, nach dem Einschalten einer Stromversorgung des Antriebs (1) und bei Empfang über das Kommunikationsmodul (13) eines Steuersignals von einer Steuervorrichtung (3), mit welchem die Verfügbarkeit des Antriebs (1) überprüft wird, eine Bestätigung an die Steuervorrichtung (3) zu übermitteln.

4. Antrieb (1) nach Anspruch 2 oder 3, **dadurch gekennzeichnet, dass** das Steuermodul (15) eingerichtet ist, bei Empfang über das Kommunikationsmodul (13) eines Steuersignals von einer Steuervorrichtung (3), mit welchem der eine oder mehrere Antriebsparameter abgefragt wird, den einen oder mehrere Antriebsparameter an die Steuervorrichtung (3) zu übermitteln.

5. Antrieb (1) nach einem der Ansprüche 1 bis 4, **dadurch gekennzeichnet, dass** das Steuermodul (15) eingerichtet ist, über eine Sensorschnittstelle (12) Betriebswerte (121) der HVAC-Anlage (5) zu erfassen und diese Betriebswerte (121) über die Kommunikationsschnittstelle an eine Steuervorrichtung (3) zu übermitteln.

6. Antrieb (1) nach einem der Ansprüche 1 bis 5, **dadurch gekennzeichnet, dass** der passive NFC-Transponder eingerichtet ist, Antriebsparameter von mehreren Antrieben (1) der HVAC-Anlage (5) zu empfangen und abzuspeichern.

7. Antrieb (1) nach einem der Ansprüche 1 bis 6, **dadurch gekennzeichnet, dass** der NFC-Transponder zwei Transponderantennen aufweist, welche derart am oder im Gehäuse des Antriebs (1) angebracht sind, dass mindestens eine der beiden Transponderantennen nach Montage des Antriebs (1) frei zugänglich bleibt, insbesondere auf einer einer Wand oder Decke abgewandten Seite des Gehäuses des Antriebs (1).

## Claims

1. Drive (1) for an HVAC installation (5), wherein the drive (1) comprises a housing and a motor for moving an actuating element (112) of the HVAC installation (5), **characterized by**:
a passive NFC transponder (14) that comprises a plurality of differently arranged transponder antennas and is configured, before a power supply of the drive (1) is switched on, to communicate a unique identifier (141) to a mobile service device (2) and also to receive from the mobile service device (2), and to store, one or more drive parameters, and
a control module (15) configured, after a power supply of the drive (1) has been switched on, to effect the control of the motor taking account of the one or more stored drive parameters.

2. Drive (1) according to Claim 1, further comprising a communication module (13) for communication with a control device of the HVAC installation (5), **characterized in that** the control module (15) is configured, after a power supply of the drive (1) has been switched on, via the communication module (13), to receive control signals for the control of the motor and to effect the control of the motor.

3. Drive (1) according to Claim 2, **characterized in that** the control module (15) is configured, after a power supply of the drive (1) has been switched on and upon reception, via the communication module (13), of a control signal from a control device (3), the availability of the drive (1) being checked by way of said control signal, to communicate a confirmation to the control device (3).

4. Drive (1) according to Claim 2 or 3, **characterized in that** the control module (15) is configured, upon reception, via the communication module (13), of a control signal from a control device (3), the one or more drive parameters being interrogated by way of said control signal, to communicate the one or more drive parameters to the control device (3).

5. Drive (1) according to one of Claims 1 to 4, **characterized in that** the control module (15) is configured to acquire operating values (121) of the HVAC installation (5) via a sensor interface (12) and to communicate said operating values (121) to a control device (3) via the communication interface.

6. Drive (1) according to one of Claims 1 to 5, **characterized in that** the passive NFC transponder is configured to receive and to store drive parameters of a plurality of drives (1) of the HVAC installation (5).

7. Drive (1) according to one of Claims 1 to 6, **characterized in that** the NFC transponder comprises two transponder antennas fitted on or in the housing of the drive (1) in such a way that at least one of the two transponder antennas remains freely accessible after mounting of the drive (1), in particular on a side of the housing of the drive (1) facing away from a wall or ceiling.

## Revendications

1. Entraînement (1) destiné à une installation HVAC (5), dans lequel l'entraînement (1) comporte un boîtier et un moteur destiné à déplacer un actionneur (112) de l'installation HVAC (5), **caractérisé par** :
un transpondeur NFC passif (14) qui comporte plusieurs antennes de transpondeur disposées différemment et qui est conçu pour transmettre un identificateur unique (141) à un dispositif de service mobile (2) avant la mise sous tension d'une alimentation électrique de l'entraînement (1) ainsi que pour recevoir et stocker un ou plusieurs paramètres d'entraînement provenant du dispositif de service mobile (2), et
un module de commande (15) qui est conçu pour effectuer la commande du moteur après la mise sous tension d'une alimentation électrique de l'entraînement (1), en tenant compte desdits un ou plusieurs paramètres d'entraînement stocké.

2. Entraînement (1) selon la revendication 1, comprenant en outre un module de communication (13) pour la communication avec un dispositif de commande de l'installation HVAC (5), **caractérisé en ce que** le module de commande (15) est conçu pour recevoir des signaux de commande pour la commande du moteur par l'intermédiaire du module de communication (13) après la mise sous tension d'une alimentation électrique de l'entraînement (1) et pour effectuer la commande du moteur.

3. Entraînement (1) selon la revendication 2, **caractérisé en ce que** le module de commande (15) est conçu pour transmettre au dispositif de commande (3) une confirmation, après la mise sous tension d'une alimentation électrique de l'entraînement (1) et lors de la réception, par l'intermédiaire du module de communication (13), d'un signal de commande provenant d'un dispositif de commande (3), au moyen duquel la disponibilité de l'entraînement (1) est vérifiée.

4. Entraînement (1) selon la revendication 2 ou 3, **caractérisé en ce que** le module de commande (15) est conçu pour transmettre au dispositif de commande (3) lesdits un ou plusieurs paramètres d'entraînement, lors de la réception, par l'intermédiaire du module de communication (13), d'un signal de commande provenant d'un dispositif de commande (3), au moyen duquel lesdits un ou plusieurs paramètres d'entraînement sont demandés.

5. Entraînement (1) selon l'une des revendications 1 à 4, **caractérisé en ce que** le module de commande (15) est conçu pour capturer des valeurs de fonctionnement (121) de l'installation HVAC (5) par l'intermédiaire d'une interface de capteur (12) et pour transmettre ces valeurs de fonctionnement (121) à un dispositif de commande (3) par l'intermédiaire de l'interface de communication.

6. Entraînement (1) selon l'une des revendications 1 à 5, **caractérisé en ce que** le transpondeur NFC passif est conçu pour recevoir et stocker des paramètres d'entraînement provenant de plusieurs entraînements (1) de l'installation HVAC (5).

7. Entraînement (1) selon l'une des revendications 1 à 6, **caractérisé en ce que** le transpondeur NFC comporte deux antennes de transpondeur qui sont montées sur ou dans le boîtier de l'entraînement (1) de telle manière qu'au moins l'une des deux antennes de transpondeur reste librement accessible après montage de l'entraînement (1), en particulier sur un côté du boîtier de l'entraînement (1) qui est opposé à un mur ou à un plafond.
